# FASCICULE DE BREVET EUROPEEN

(11) **EP 2 047 011 B1**
(45) Date de publication et mention de la délivrance du brevet: **08.04.2020**
(21) Numéro de dépôt: 07788854.3
(22) Date de dépôt: 11.06.2007
(51) Int. Cl.: C25B 1/10, C25B 11/04

(54) **DISPOSITIF D'ELECTROLYSE DE L'EAU**
WASSERELEKTROLYSEVORRICHTUNG
WATER ELECTROLYSIS DEVICE

(30) Priorité: 25.07.2006 FR 0606772
(43) Date de publication de la demande: 15.04.2009
(73) Titulaire: Institut National Polytechnique de Toulouse, 31029 Toulouse Cedex 4 (FR)
(72) Inventeur: BASSEGUY, Régine, 31810 Vernerque (FR); BERGEL, Alain, 31500 Toulouse (FR); DA SILVA, Serge, 66100 Perpignan (FR); DE SILVA MUÑOZ, Leonardo, Cuernavaca Morelos (MX); FERON, Damien, 92260 Fontenay-aux-Roses (FR); ROY, Marc, 91440 Bures sur Yvette (FR)
(74) Mandataire: Jelsch, Emmanuel Edwin
(86) Numéro de dépôt international: PCT/FR2007/000949
(87) Numéro de publication internationale: WO 2008/012403

(56) Documents cités:
- WO-A-01/88224
- WO-A1-90/09685
- JP-A- 57 060 086
- US-A- 4 470 894
- US-A- 5 776 328
- US-B2- 6 869 517
- J. COUPEZ: "Réduction éléctrochimique de l'eau et des ses ions. II. Cas des acides faibles et des mélanges tampons" ANALYTICA CHIMICA ACTA, vol. 17, 1957, pages 300-307, XP002423441
- M. R. ST JOHN, A. J. FIRGALA, A. F. SAMMELLS: "Hydrogen Generation from Glucose Depolarized Water Electroysis" J. ELECTORCHEM. SOC., vol. 128, no. 5, mai 1981 (1981-05), pages 1174-1176, XP002423440

## Description

### DOMAINE TECHNIQUE

La présente invention se situe dans le domaine de l'électrolyse de l'eau et concerne en particulier un dispositif d'électrolyse de l'eau afin de produire de l'hydrogène.

### ETAT DE LA TECHNIQUE

Dans le domaine de la production d'énergie, la prise en compte de l'augmentation des besoins, des coûts, de la sécurité d'approvisionnement et des risques environnementaux impose le développement de recherches toujours plus poussées sur la diversification et l'utilisation optimale des ressources primaires (fossiles, nucléaire, renouvelables, etc ...). L'hydrogène, qui permet de stocker et de distribuer de façon souple l'énergie tout en étant peu polluant, est à ce titre un bon candidat.

Pour être économiquement et écologiquement viable, l'utilisation massive d'hydrogène comme source d'énergie thermique et électrique repose néanmoins sur le développement de toutes les étapes de sa filière allant de la production à l'utilisation finale, en passant par le stockage et la distribution.

Puisque l'hydrogène n'est pas directement disponible dans la nature, il est en particulier important de respecter au mieux ces critères au niveau de la production, celle-ci devant être compétitive (les coûts de production ne doivent pas être trop élevés), propre (le procédé ne doit pas être polluant pour garder l'un des atouts majeurs de l'hydrogène) et présenter un rendement énergétique optimisé (la consommation en énergie doit être limitée).

Une des méthodes de production de l'hydrogène est l'électrolyse de l'eau qui est principalement conduite à l'aide des deux dispositifs suivants :
- le dispositif d'électrolyse de l'eau en milieu alcalin (essentiellement hydroxyde de potassium en concentration de 25 % à 40 % en masse). Bien qu'il profite d'une longue expérience, son développement nécessite la mise au point de nouveaux matériaux répondant à plusieurs critères, dont la résistance à la corrosion en milieu alcalin et la catalyse des réactions d'électrodes afin d'obtenir une forte densité de courant et une faible surtension. La recherche d'une surtension cathodique plus faible conduit en particulier à activer la cathode par formation d'un dépôt de surface à action catalytique, le plus souvent par un dépôt de nickel sur une base fer. Au niveau de l'anode, la base qui doit être plus noble (acier nickelé ou nickel massif) est souvent recouverte par un catalyseur dont le dépôt et la stabilité demeurent encore un point délicat faisant l'objet de nombreuses recherches. On le voit, l'électrolyse de l'eau en milieu alcalin présente l'inconvénient de mettre en œuvre une solution électrolytique corrosive, des électrodes comprenant des matériaux coûteux et qui se dégradent au cours du temps.
- le dispositif d'électrolyse en milieu acide (acide sulfurique le plus souvent). Il comprend du plomb comme matériau conducteur pour les électrodes et les tuyauteries ou des catalyseurs à base de métaux nobles (par exemple noir de platine) pour la cathode et l'anode ainsi qu'une membrane cationique type Nafion (polymère perfluoré d'acide sulfonique). Les problèmes de la corrosion des électrodes due à la forte acidité du milieu (valeurs de pH typiquement négatives), du non-respect de l'environnement à cause de l'usage du plomb et enfin du coût élevé des catalyseurs ont depuis longtemps cantonné l'électrolyse en milieu acide à la production de faibles quantités d'hydrogène très pur pour les laboratoires. Le document WO90/09685 décrit un procédé de production de gaz, en particulier d'hydrogène, dans un électrolyte ayant un pH proche de la neutralité.

### EXPOSÉ DE L'INVENTION

Un but de l'invention est donc de pallier les problèmes et inconvénients des techniques existantes en fournissant un dispositif d'électrolyse de l'eau qui répond pleinement aux contraintes techniques, économiques et écologiques précitées afin de produire de l'hydrogène.

Un autre but de l'invention est de fournir un dispositif d'électrolyse de l'eau ne comportant pas une solution électrolytique corrosive ni des électrodes en matériaux coûteux se dégradant au cours du temps.

L'objet de l'invention concerne un dispositif d'électrolyse destiné à produire de l'hydrogène par réduction de l'eau et son utilisation pour produire de l'hydrogène par réduction de l'eau, le dispositif d'électrolyse comprenant un compartiment cathodique, un compartiment anodique, un élément reliant les compartiments et permettant la migration des ions entre eux, le dispositif étant caractérisé en ce que le compartiment cathodique contient au moins un acide faible apte à catalyser la réduction, une solution électrolytique dont le pH est dans la gamme comprise entre 3 et 9 et une cathode qui est en contact avec la solution électrolytique et qui est composée en partie ou en totalité d'au moins un matériau choisi dans le groupe constitué par les polymères conducteurs, les formes oxydées ou non du Fe, Cr, Ni ou Co.

Avantageusement, ce pH est dans une gamme comprise entre 4 et 9; préférentiellement entre 6 et 9, encore plus préférentiellement égal à 8.

L'élément qui relie les compartiments peut être un pont électrochimique connu de l'homme du métier, par exemple une membrane cationique, une céramique, ...

Le dispositif d'électrolyse de l'invention peut être préférentiellement décliné en deux modes de réalisation se distinguant par les conditions acido-basiques du compartiment cathodique, à savoir :
- un dispositif d'électrolyse dans lequel le pH de la solution électrolytique contenue dans le compartiment anodique et le pH de la solution électrolytique contenue dans le compartiment cathodique sont de 3 à 9. Le plus souvent, la composition des deux électrolytes est identique. Préférentiellement, le pH de la solution électrolytique contenue dans le compartiment anodique est sensiblement le même que celui de la solution électrolytique contenue dans le compartiment cathodique, à savoir qu'il est dans la même gamme ou égal au pH de la solution électrolytique contenue dans le compartiment cathodique. Un tel dispositif est le plus souvent exploité en mode potentiostatique.
- un dispositif d'électrolyse dans lequel le pH de la solution électrolytique contenue dans le compartiment anodique est basique, d'environ 15 de préférence. Ce mode de réalisation peut inclure à titre optionnel certaines des caractéristiques d'un dispositif d'électrolyse de l'eau en milieu alcalin existant. Par ailleurs, le pH de la solution électrolytique contenu dans le compartiment cathodique est préférentiellement d'environ 4. Un tel dispositif est le plus souvent exploité en mode intentiostatique.

De façon générale, lors de la mise en œuvre de l'invention, l'acide faible apte à catalyser la réduction de l'eau peut être sous forme de sel (dissous en partie ou en totalité dans la solution électrolytique) et/ou adsorbé sur la cathode. Bien entendu, selon le pKa de l'acide faible et les conditions de pH de la solution électrolytique, l'acide faible peut être partiellement dissocié entre sa forme acide et sa base conjuguée, chacune de ces deux espèces pouvant éventuellement participer à l'action catalytique.

Toutefois, avantageusement, l'acide faible est choisi de telle façon que son pKa est au moins supérieur d'une unité au pH de la solution électrolytique contenue dans le compartiment cathodique. Il est dans ces conditions peu ou pas dissocié. La totalité ou l'essentiel des molécules d'acide faible préserve donc son atome d'hydrogène labile au caractère acide. Puisque c'est cet atome qui permet la catalyse de la réduction de l'eau, le potentiel catalytique de l'acide faible est ainsi optimisé.

Par ailleurs, l'acide faible a préférentiellement un pKa compris entre 3 et 9, encore plus préférentiellement entre 3 et 5. Ceci a pour conséquence que l'atome d'hydrogène responsable de l'effet catalytique de l'acide faible est particulièrement labile et présente un caractère acide accru, ce qui lui permet de mieux catalyser la réduction de l'eau de telle sorte que celle-ci nécessite une énergie plus réduite pour se produire.

Ces deux derniers modes de réalisation peuvent être avantageusement combinés. Par exemple, l'acide glycolique qui possède un pKa de 3,83 et une solubilité élevée de 11,6 M peut être introduit dans la solution électrolytique du compartiment cathodique qui présente un pH égal à 3.

Au cours de l'électrolyse de l'eau, des ions OH⁻ et H⁺ sont produits respectivement dans la solution électrolytique du compartiment cathodique et dans celle du compartiment anodique. Préférentiellement, afin que la réduction de l'eau se produise avec un rendement énergétique optimal, il convient d'empêcher ou de limiter la variation de pH qui en résulte. Dans ce but, au moins un acide faible supplémentaire jouant le rôle de tampon est ajouté dans la solution électrolytique contenue dans le compartiment cathodique et/ou anodique afin d'empêcher ou de limiter la variation du pH de cette solution ou de ces solutions au cours de la réduction de l'eau. Cet acide supplémentaire, choisi en fonction du pH du compartiment dans lequel il est introduit, peut remplir en outre la fonction de catalyse de la réduction de l'eau.

Avantageusement, à l'aide de cet acide faible supplémentaire, la variation du pH de la solution électrolytique contenue dans le compartiment anodique et/ou cathodique ne varie pas au cours de la réduction de l'eau de plus de deux unités de pH, préférentiellement d'une unité de pH.

Préférentiellement, cet acide faible supplémentaire est de même structure chimique que l'acide faible apte à catalyser la réduction.

D'autres objets, caractéristiques et avantages de l'invention apparaîtront mieux à la lecture de la description qui suit, donnée à titre illustratif et non limitatif.

### DESCRIPTION BREVE DES FIGURES

L'invention comporte aussi trois figures annexées qui sont explicitées dans les exemples 1 et 2 ci-après.
La figure 1 représente l'évolution du courant en fonction du temps au cours d'une électrolyse à potentiel constant.
La figure 2 représente l'évolution au cours du temps du volume d'hydrogène produit par l'électrolyse de la solution électrolytique « KCl + dihydrogénophosphate ».
La figure 3 représente l'évolution au cours du temps du potentiel aux bornes d'un dispositif d'électrolyse selon l'invention.

### DESCRIPTION DETAILLEE DE L'INVENTION

Les exemples qui suivent ont été réalisés avec du dihydrogénophosphate en solution en tant que catalyseur de la réduction de l'eau.

L'acide faible peut être de nature minérale (tel que par exemple l'acide orthophosphorique, le dihydrogénophosphate, le monohydrogénophosphate, ...) ou organique (tel que par exemple l'acide lactique, l'acide gluconique, l'acide acétique, l'acide monochloroacétique, l'acide ascorbique, l'hydrogénosulfate , l'acide glycolique, les acides aminés, préférentiellement la leucine ou la lysine).

### 1) Electrolyse « en conditions voisines de la neutralité ».

### 1.1 Conditions opératoires.

Un dispositif d'électrolyse selon l'invention a les caractéristiques suivantes :
- deux compartiments (anodique et cathodique) d'un volume de 125 cm³, contenant la même solution électrolytique, réalisés en plexiglas et séparés par une membrane Nafion 1135 préalablement nettoyée par immersion dans de l'eau distillée bouillante ;
- une électrode de travail : cathode en acier inoxydable 316 L, surface géométrique = 20 cm² ;
- une électrode auxiliaire : anode en grille de platine, surface géométrique = 20 cm² ;
- une électrode de référence : Electrode au Calomel Saturée (ECS).

A l'aide de ce dispositif, une électrolyse de l'eau à potentiel constant de -1,1 V/ECS et à une température comprise entre 20 et 25°C a été réalisée pendant 100 minutes sur deux électrolytes distincts, à savoir :
1) une solution électrolytique de référence constitué d'une solution de KCl (100 mM) à pH = 8,0 ;
2) une solution électrolytique selon l'invention constitué de KCl (100 mM) + KH₂PO₄ (500 mM) à pH = 8,0 (ajustement du pH par ajout de KOH).

Afin de récupérer l'hydrogène formé, le compartiment cathodique était fermé hermétiquement par un bouchon muni d'un joint en Téflon et traversé par un tuyau qui débouchait dans une éprouvette graduée remplie d'eau et renversée dans un récipient contenant également de l'eau. Il est à noter que le dispositif de l'invention peut être également utilisé pour la production d'oxygène, celui-ci étant alors généré dans le compartiment anodique qui est fermé hermétiquement de la même façon.

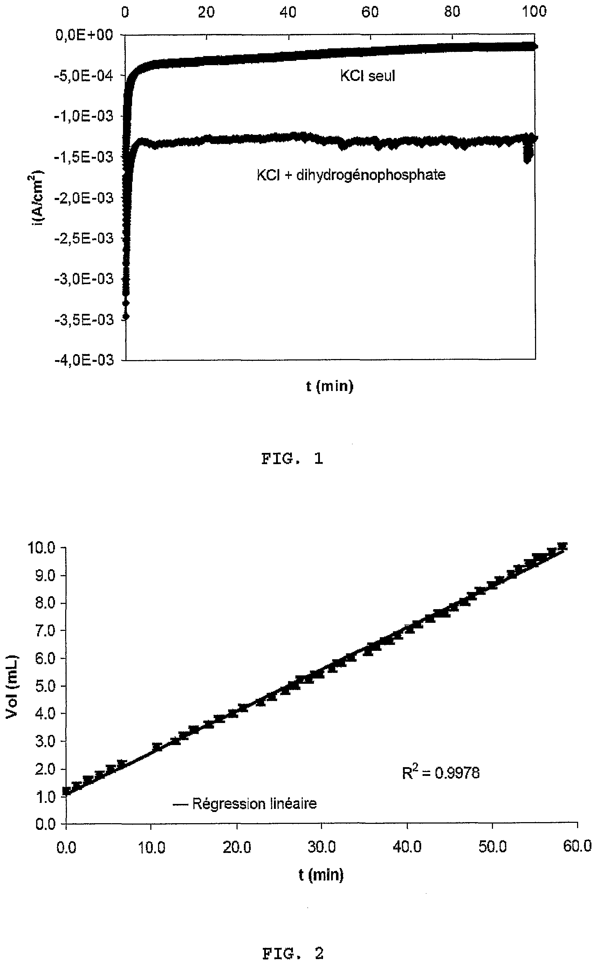

La figure 1 représente l'évolution du courant en fonction du temps au cours d'une électrolyse à potentiel constant d'une solution électrolytique de référence (noté « KCl seul ») et d'une solution électrolytique de pH = 8.0 contenant du dihydrogénophosphate (noté « KCl + dihydrogénophosphate »).

Les résultats pour les deux électrolyses sont regroupés dans le tableau 1. Ces données illustrent :
- la faible valeur du courant cathodique et une réduction de l'eau réduite voire inexistante pour la solution électrolytique (1) de référence, aucun dégagement d'hydrogène n'ayant été visible. Ceci est à comparer avec la valeur significative du courant cathodique obtenu avec la solution électrolytique (2) qui se traduit cette fois par un net dégagement d'hydrogène ;
- la stabilité du courant cathodique lors de la seule mise en œuvre de la solution électrolytique(2).

**Tableau 1**

| | | |
|---|---|---|
| **Electrolyte** | (1) KCl (100 mM) | (2) KCl (100 mM) + KH₂PO₄ (500 mM) |
| **Courant cathodique** | De 4 à 1,7 A.m⁻² | 13 A.m⁻² (très stable) |
| **Volume d'hydrogène produit en 70 minutes** | Pas de production visible | 10 mL |
| **Vitesse de production d'hydrogène** | 0 mL/heure | De 9 à 10 mL/heure, soit 4,5 à 5 L/h/m² |

### 1.2 Calcul du rendement.

Le rendement faradique au cours de la production d'hydrogène à partir de l'électrolyte (2) a été calculé à partir des données résumées dans le tableau 2. Le rendement faradique 'brut' obtenu dans ces conditions était voisin de 72 %. Comme aucune production n'a été détectée lorsque l'expérience était réalisée avec la solution électrolytique(1) de référence, le courant alors obtenu a été considéré comme un courant résiduel, sans doute dû à la réduction des oxydes de surface de l'électrode. La décroissance du courant de 4 à 1,7 A/m² en 70 minutes a conforté cette hypothèse. Cette partie du courant n'a donc pas été utilisée pour transformer une espèce en solution, mais pour faire évoluer l'état de surface de l'électrode. Sur un procédé de longue durée, on peut prévoir que cette partie du courant tendra vers zéro lorsque tous les oxydes seront réduits (après quelques dizaines d'heures environ). Cette quantité d'électricité a donc été soustraite pour obtenir le rendement faradique 'corrigé' qui serait obtenu après quelques heures d'électrolyse. En soustrayant la quantité d'électricité résiduelle, le rendement faradique 'corrigé' était égal à 92 %, ce qui signifie que 92 % de la consommation d'électricité supplémentaire induite par la présence de dihydrogénophosphate ont été utilisés pour la production d'hydrogène.

**Tableau 2**

| | |
|---|---|
| Constante des gaz parfait R (J/K/mole) | 8,314 |
| Constante de Faraday (C/mole) | 96500 |
| Température (K) | 298 |
| Pression (Pa) | 1,013.10⁵ |
| Surface d'électrode (cm²) | 20 |
| Nombre d'électrons mis en jeu par molécule de H₂ produite | 2 |
| Temps d'électrolyse considéré (s) | 4186 |
| Volume d'hydrogène produit (mL) | 10 |
| **Nombre de moles d'H₂ produit** | **4,09.10⁻⁴** |
| Quantité d'électricité totale (C/cm²) | 5,516 |
| **Rendement faradique 'brut'** | **71,6 %** |
| Quantité d'électricité résiduelle (C/cm²) (KCl seul) | 1,247 |
| Quantité d'électricité supplémentaire due à la présence de dihydrogénophosphate (C/cm²) | 4,269 |
| **Rendement faradique 'corrigé'** | **92 %** |

La présence de dihydrogénophosphate en solution à pH voisin de la neutralité (pH = 8,0) permet la production électrochimique d'hydrogène (4 à 5 L/h/m²) sur acier inoxydable dans un domaine de potentiels pour lequel aucune production n'est obtenue en absence de dihydrogénophosphate. La quantité d'électricité consommée en présence des ions dihydrogénophosphate est utilisée à plus de 92 % pour la production d'hydrogène, ce qui constitue un excellent rendement.

Différentes constatations ont démontré que l'acide faible selon l'invention a bien eu pour effet de catalyser la réduction de l'eau.

Par exemple, à pH = 8,0, le pH n'a pas varié dans le compartiment cathodique au cours de l'électrolyse de l'eau et ce malgré la production d'ions OH⁻. Ceci est dû au fait qu'à pH = 8,0, le dihydrogénophosphate et le monohydrogénophosphate étaient les espèces phosphate prédominantes (respectivement 14 % et 86 % de ces espèces) et ont joué le rôle de tampon (pKa du couple H₂PO₄⁻/HPO₄²⁻ = 7,20). Or, le pH étant ainsi constant, la concentration en protons libres à pH = 8,0 était en permanence très faible puisqu'égale à 10⁻⁸ M. Cette concentration ne pouvait donc être responsable du courant cathodique élevé de 13 A.m⁻², courant par ailleurs bien supérieur au courant cathodique de l'électrolyte de référence (1) (KCl 100 mM) qui était également à pH = 8,0.

### 2) Electrolyse « en conditions basiques ».

### 2.1 Conditions opératoires.

Les exemples qui suivent ont été effectués avec le même dispositif d'électrolyse et selon le même protocole opératoire que dans l'exemple précédent, si ce n'est que les électrolyses ont cette fois été réalisées à une intensité constante de -13,5 A.m⁻² sur trois électrolytes distincts dont les caractéristiques sont résumées dans le tableau 3.

**Tableau 3**

| **Electrolyse** | **Electrolyte du compartiment anodique** | **Electrolyte du compartiment cathodique** |
|---|---|---|
| (I) KOH (référence) | KOH 25 % masse | KOH 25 % masse, pH 15,0 |
| (II) KOH-PO4 (0,5M) | KOH 25 % masse | KH₂PO₄ 0,5M, pH 8,0 |
| (III) KOH-PO4 (1M) | KOH 25 % masse | KH₂PO₄ 1M, pH 4,0 |

### 2.2 Mise en évidence de la stabilité du dispositif d'électrolyse et calcul du rendement.

Les électrolyses ont duré 2 heures, la température pour les trois expériences était comprise entre 20 °C et 25°C. La production d'hydrogène, mesurée comme précédemment était en moyenne de l'ordre de 10 mL/h, ce qui constitue un rendement faradique 'brut' voisin de 80 %.

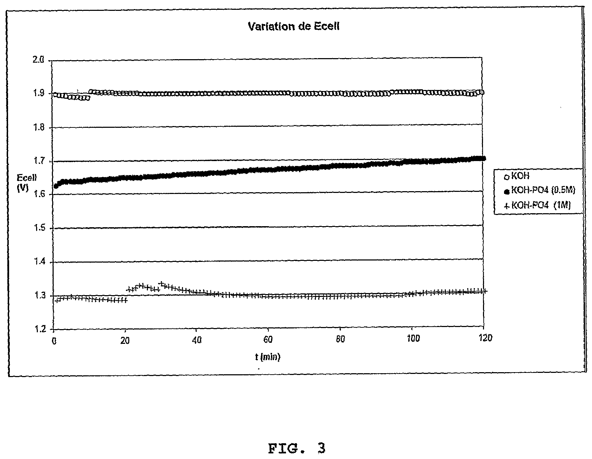

L'évolution du potentiel aux bornes du dispositif d'électrolyse (noté Ecell) est reportée sur la figure 3 qui représente l'évolution au cours du temps du potentiel aux bornes d'un dispositif d'électrolyse lors d'une électrolyse à intensité constante de -13.5 A.m⁻² d'une solution électrolytique de référence (noté « KOH »), d'une solution électrolytique contenant du dihydrogénophosphate à un pH = 8.0 (noté « KOH-PO4 (0,5M) ») et d'une solution électrolytique contenant du dihydrogénophosphate à un pH = 4.0 (noté « KOH-PO4 (1M) »). Comme l'illustre cette figure, la présence de dihydrogénophosphate en tant que catalyseur a là encore permis d'améliorer le rendement énergétique puisqu'un gain en potentiel de 200 et 600 mV par rapport à la solution électrolytique de référence (I) a été observé en présence respectivement de 0,5 M et 1 M de dihydrogénophosphate.

Par ailleurs, le potentiel Ecell est resté sensiblement constant pour une production d'hydrogène qui a suivi une loi linéaire en fonction du temps. Ceci démontre la stabilité de l'électrode d'acier inoxydable qui n'a subi aucune modification de son état de surface (pollution, adsorption, corrosion ...) .

La consommation énergétique lors de la production d'hydrogène à partir des trois électrolytes a été calculée (tableau 4), sachant que, lorsque la consommation énergétique est exprimée en kWh/Nm³, 1 Nm³ correspond à 1 m³ de gaz mesuré à 0°C et à la pression atmosphérique.

**Tableau 4**

| **Electrolyte** | **Ecell moyen (V)** | **Energie dépensée en 2 heures (kJ)** | **Energie dépensée en 2 heures (kWh)** | **Consommation énergétique kWh/m³ de H₂** | **Consommation énergétique kWh/Nm³ de H₂** |
|---|---|---|---|---|---|
| (I) KOH | 1,90 | 0,369 | 1,02E-04 | 4,6 | 4,9 |
| (II) KOH-PO4 (0,5M) | 1,67 | 0,324 | 9,01E-05 | 4,0 | 4,3 |
| (III) KOH-PO4 (1M) | 1,30 | 0,252 | 7,01E-05 | 3,1 | 3,3 |

La présence de dihydrogénophosphate dans la solution électrolytique du compartiment cathodique permet un gain d'énergie de respectivement 13 et 33 % pour une concentration de 0,5 M et 1 M de dihydrogénophosphate.

Il est à noter que le rendement énergétique est à peu près proportionnel à la concentration en acide faible. Cette concentration peut donc être avantageusement augmentée tant que le rendement énergétique augmente, c'est à dire en particulier jusqu'à ce que l'acide faible précipite et/ou s'adsorbe de façon trop importante sur la cathode.

### 3) Conclusions.

Comme illustré par les exemples qui précèdent, le dispositif d'électrolyse de l'invention permet avantageusement d'obtenir dans ses deux modes de réalisation principaux un très bon rendement faradique lors de la production d'hydrogène.

Par ailleurs, les cathodes en acier inoxydable du dispositif d'électrolyse de l'invention ne subissent aucune dégradation apparente. L'utilisation dans le compartiment cathodique d'une solution électrolytique de pH modéré combiné au pouvoir catalytique de l'acide faible qu'il contient autorise donc la fabrication d'un dispositif d'électrolyse performant qui comprend au moins un élément en contact avec la solution électrolytique du compartiment cathodique, cet élément étant composé en partie ou en totalité d'au moins un matériau peu noble. Un matériau peu noble convenant à la mise en œuvre de l'invention peut être choisi dans le groupe constitué par les polymères conducteurs, les formes oxydées ou non du Fe, Cr, Ni ou Co. Ce matériau peut entrer dans la composition d'éléments du dispositif de l'électrolyse tels que les électrodes, les parois des compartiments, les circuits de circulation des solutions, etc ... Ainsi, l'élément peut être une cathode en acier inoxydable, préférentiellement en acier inoxydable 316L.

La mise en œuvre dans le cadre de l'invention d'au moins un matériau peu noble permet avantageusement de réduire fortement les coûts de fabrication car un tel matériau est généralement moins coûteux que ceux classiquement utilisés tel que le platine, de respecter au mieux les contraintes environnementales, d'augmenter les durées de vie de tels dispositifs tout en permettant l'accès à un très bon rendement dans la production d'hydrogène par électrolyse de l'eau.

## Revendications

1. Dispositif d'électrolyse destiné à produire de l'hydrogène par réduction de l'eau comprenant un compartiment cathodique, un compartiment anodique, un élément reliant lesdits compartiments et permettant la migration des ions entre eux,
ledit dispositif étant **caractérisé en ce que** ledit compartiment cathodique contient :
- une solution électrolytique dont le pH est dans la gamme comprise entre 3 et 9,
- une cathode qui est en contact avec la solution électrolytique et qui est composée en partie ou en totalité d'au moins un matériau choisi dans le groupe constitué par les polymères conducteurs, les formes oxydées ou non du Fe, Cr, Ni ou Co,
- au moins un acide faible, dont l'atome d'hydrogène labile au caractère acide catalyse la réduction de l'eau, adsorbé sur ladite cathode et/ou sous forme de sel dissous en partie ou en totalité dans la solution électrolytique.

2. Dispositif d'électrolyse selon la revendication 1, **caractérisé en ce que** ladite cathode est en acier inoxydable.

3. Dispositif d'électrolyse selon la revendication 2, **caractérisé en ce que** ledit acier inoxydable est l'acier inoxydable 316L.

4. Dispositif d'électrolyse selon l'une quelconque des revendications précédentes, **caractérisé en ce que** le pH de la solution électrolytique contenue dans ledit compartiment cathodique est dans une gamme comprise entre 4 et 9.

5. Dispositif d'électrolyse selon la revendication 4, **caractérisé en ce que** le pH de la solution électrolytique contenue dans ledit compartiment cathodique est compris entre 6 et 9.

6. Dispositif d'électrolyse selon la revendication 5, **caractérisé en ce que** le pH de la solution électrolytique contenue dans ledit compartiment cathodique est égal à 8.

7. Dispositif d'électrolyse selon l'une quelconque des revendications précédentes, **caractérisé en ce que** le pH de la solution électrolytique contenue dans ledit compartiment anodique est sensiblement le même que celui de la solution électrolytique contenue dans ledit compartiment cathodique.

8. Dispositif d'électrolyse selon l'une quelconque des revendications 1 à 6, **caractérisé en ce que** le pH de la solution électrolytique contenue dans ledit compartiment anodique est basique.

9. Dispositif d'électrolyse selon la revendication 8, **caractérisé en ce que** le pH de la solution électrolytique contenue dans ledit compartiment anodique est d'environ 15.

10. Dispositif d'électrolyse selon la revendication 8 ou 9, **caractérisé en ce que** le pH de la solution électrolytique contenue dans ledit compartiment cathodique est d'environ 4.

11. Dispositif d'électrolyse selon l'une quelconque des revendications précédentes, **caractérisé en ce que** ledit acide faible a un pKa compris entre 3 et 9.

12. Dispositif d'électrolyse selon la revendication 11, **caractérisé en ce que** ledit pKa est compris entre 3 et 5.

13. Dispositif d'électrolyse selon l'une quelconque des revendications précédentes, **caractérisé en ce que** ledit acide faible est choisi de telle façon que son pKa est au moins supérieur d'une unité au pH de la solution électrolytique contenue dans ledit compartiment cathodique.

14. Dispositif d'électrolyse selon l'une quelconque des revendications précédentes, **caractérisé en ce que** ledit acide faible est choisi dans le groupe constitué par l'acide orthophosphorique, le dihydrogénophosphate, le monohydrogénophosphate, l'acide lactique, l'acide gluconique, l'acide acétique, l'acide monochloroacétique, l'acide ascorbique, l'hydrogénosulfate, l'acide glycolique, les acides aminés.

15. Dispositif d'électrolyse selon la revendication 14, **caractérisé en ce que** ledit acide aminé est la leucine ou la lysine.

16. Dispositif d'électrolyse selon l'une quelconque des revendications précédentes, **caractérisé en ce qu'**au moins un acide faible supplémentaire est ajouté dans la solution électrolytique contenue dans ledit compartiment cathodique et/ou anodique afin d'empêcher ou de limiter la variation du pH de cette solution ou de ces solutions au cours de la réduction de l'eau.

17. Dispositif d'électrolyse selon la revendication 16, **caractérisé en ce que** ledit acide faible supplémentaire est de même structure chimique que l'acide faible initialement contenu dans ledit compartiment cathodique.

18. Dispositif selon l'une quelconque des revendications précédentes, **caractérisé en ce que** ledit compartiment cathodique est fermé hermétiquement.

19. Utilisation d'un dispositif tel que défini dans l'une quelconque des revendications 1 à 18 pour produire de l'hydrogène par réduction de l'eau.

## Patentansprüche

1. Elektrolysevorrichtung zur Erzeugung von Wasserstoff durch Reduktion von Wasser, umfassend eine kathodische Kammer, eine anodische Kammer, ein Element, das diese Kammer verbindet und die Migration von Ionen ermöglicht, wobei die besagte Vorrichtung **dadurch gekennzeichnet ist, dass** die besagte kathodische Kammer enthält:
- eine Elektrolytlösung, deren pH-Wert im Bereich zwischen 3 und 9 liegt,
- eine Kathode, welche in Kontakt mit der Elektrolytlösung ist und welche teilweise oder gänzlich aus einem Material besteht, das ausgewählt ist aus der Gruppe bestehend aus leitfähigen Polymeren, oxidierten oder nicht oxidierten Formen von Fe, Cr, Ni oder Co,
- mindestens eine schwache Säure, deren labiles Wasserstoffatom mit saurem Charakter die Reduktion von Wasser katalysiert, adsorbiert auf die besagte Kathode und/oder in der Form eines teilweise oder gänzlich in der Elektrolytlösung aufgelösten Salzes.

2. Elektrolysevorrichtung gemäss Anspruch 1, **dadurch gekennzeichnet, dass** die besagte Kathode aus Edelstahl besteht.

3. Elektrolysevorrichtung gemäss Anspruch 2, **dadurch gekennzeichnet, dass** der besagte Edelstahl 316L-Edelstahl ist.

4. Elektrolysevorrichtung gemäss irgendeinem der vorhergehenden Ansprüche, **dadurch gekennzeichnet, dass** der pH-Wert der in der besagten kathodischen Kammer enthaltenen Elektrolytlösung im Bereich von 4 bis 9 liegt.

5. Elektrolysevorrichtung gemäss Anspruch 4, **dadurch gekennzeichnet, dass** der pH-Wert der in der besagten kathodischen Kammer enthaltenen Elektrolytlösung zwischen 6 und 9 liegt.

6. Elektrolysevorrichtung gemäss Anspruch 5, **dadurch gekennzeichnet, dass** der pH-Wert der in der besagten kathodischen Kammer enthaltenen Elektrolytlösung gleich 8 ist.

7. Elektrolysevorrichtung gemäss irgendeinem der vorhergehenden Ansprüche, **dadurch gekennzeichnet, dass** der pH-Wert der in der besagten anodischen Kammer enthaltenen Elektrolytlösung im Wesentlichen derselbe wie derjenige der in der besagten kathodischen Kammer enthaltenen Elektrolytlösung ist.

8. Elektrolysevorrichtung gemäss irgendeinem der Ansprüche 1 bis 6, **dadurch gekennzeichnet, dass** der pH-Wert der in der besagten anodischen Kammer enthaltenen Elektrolytlösung basisch ist.

9. Elektrolysevorrichtung gemäss Anspruch 8, **dadurch gekennzeichnet, dass** der pH-Wert der in der besagten anodischen Kammer enthaltenen Elektrolytlösung etwa 15 beträgt.

10. Elektrolysevorrichtung gemäss Anspruch 8 oder 9, **dadurch gekennzeichnet, dass** der pH-Wert der in der besagten anodischen Kammer enthaltenen Elektrolytlösung etwa 4 beträgt.

11. Elektrolysevorrichtung gemäss irgendeinem der vorhergehenden Ansprüche, **dadurch gekennzeichnet, dass** die besagte schwache Säure einen pKa-Wert zwischen 3 und 9 aufweist.

12. Elektrolysevorrichtung gemäss Anspruch 11, **dadurch gekennzeichnet, dass** der besagte pKa-Wert zwischen 3 und 5 liegt.

13. Elektrolysevorrichtung gemäss irgendeinem der vorhergehenden Ansprüche, **dadurch gekennzeichnet, dass** die besagte schwache Säure derart ausgewählt ist, dass deren pKa-Wert mindestens grösser um eine Einheit als der pH-Wert der in der besagten kathodischen Kammer enthaltenen Elektrolytlösung ist.

14. Elektrolysevorrichtung gemäss irgendeinem der vorhergehenden Ansprüche, **dadurch gekennzeichnet, dass** die besagte schwache Säure ausgewählt ist aus der Gruppe bestehend aus Orthophosphorsäure, Dihydrogenphosphat, Monohydrogenphosphat, Milchsäure, Gluconsäure. Essigsäure, Monochloressigsäure, Ascorbinsäure, Hydrogensulfat, Glykolsäure, Aminosäuren.

15. Elektrolysevorrichtung gemäss Anspruch 14, **dadurch gekennzeichnet, dass** die besagte Aminosäure Leucin oder Lysin ist.

16. Elektrolysevorrichtung gemäss irgendeinem der vorhergehenden Ansprüche, **dadurch gekennzeichnet, dass** mindestens eine zusätzliche schwache Säure in die in der besagten kathodischen Kammer und/oder anodischen Kammer enthaltenen Elektrolytlösung zugesetzt wird, um die Veränderung des pH-Werts dieser Lösung oder dieser Lösungen während der Reduktion von Wasser zu verhindern oder zu begrenzen.

17. Elektrolysevorrichtung gemäss Anspruch 16, **dadurch gekennzeichnet, dass** die besagte zusätzliche schwache Säure dieselbe chemische Struktur aufweist wie die ursprünglich in der besagten kathodischen Kammer enthalte schwache Säure.

18. Elektrolysevorrichtung gemäss irgendeinem der vorhergehenden Ansprüche, **dadurch gekennzeichnet, dass** die besagte kathodische Kammer hermetisch abgedichtet ist.

19. Verwendung einer wie in irgendeinem der Ansprüche 1 bis 18 definierten Elektrolysevorrichtung, zur Erzeugung von Wasserstoff durch Reduktion von Wasser.

## Claims

1. An electrolysis device intended to produce hydrogen by the reduction of water, comprising a cathode compartment, an anode compartment and an element connecting said compartments and allowing ions to migrate between them,
said device being **characterized in that** said cathode compartment contains:
- an electrolytic solution, the pH of which is in the range between 3 and 9,
- a cathode which is in contact with the electrolytic solution and which is being partly or entirely made of at least one material selected from the group consisting of conductive polymers, oxidized or non-oxidized forms of Fe, Cr, Ni or Co,
- at last one weak acid, the acidic labile hydrogen atom of which catalyzes the reduction of water, adsorbed onto said cathode and/or in the form of salt partially or totally dissolved in the electrolytic solution.

2. An electrolysis device according to claim 1, **characterized in that** said cathode is made of stainless steel.

3. An electrolysis device according to claim 2, **characterized in that** said stainless steel is 316L stainless steel.

4. An electrolysis device according to any one of the preceding claims, **characterized in that** the pH of the electrolytic solution contained in said cathode compartment is in the range between 4 and 9.

5. An electrolysis device according to claim 4, **characterized in that** the pH of the electrolytic solution contained in said cathode compartment is in the range between 6 and 9.

6. An electrolysis device according to claim 5, **characterized in that** the pH of the electrolytic solution contained in said cathode compartment is equal to 8.

7. An electrolysis device according to any one of the preceding claims, **characterized in that** the pH of the electrolytic solution contained in said anode compartment is substantially the same as that of the electrolytic solution contained in said cathode compartment.

8. An electrolysis device according to any one of claims 1 to 6, **characterized in that** the pH of the electrolytic solution contained in said anode compartment is basic.

9. An electrolysis device according to claim 8, **characterized in that** the pH of the electrolytic solution contained in said anode compartment is approximately 15.

10. An electrolysis device according to claim 8 or 9, **characterized in that** the pH of the electrolytic solution contained in said cathode compartment is approximately 4.

11. An electrolysis device according to any one of the preceding claims, **characterized in that** said weak acid has a pKa in the range between 3 and 9.

12. An electrolysis device according to claim 11, **characterized in that** said pKa is in the range between 3 and 5.

13. An electrolysis device according to any of the preceding claims, **characterized in that** said weak acid is selected so that its pKa is greater by at least one unit than the pH of the electrolytic solution contained in said cathode compartment.

14. An electrolysis device according to any one of the preceding claims, **characterized in that** said weak acid is selected from the group consisting of orthophosphoric acid, dihydrogen phosphate, monohydrogen phosphate, lactic acid, gluconic acid, acetic acid, monochloroacetic acid, ascorbic acid, hydrogen sulfate, glycolic acid, and amino acids.

15. An electrolysis device according to claim 14, **characterized in that** said amino acid is leucine or lysine.

16. An electrolysis device according to any one of the preceding claims, **characterized in that** at least one additional weak acid is added to the electrolytic solution contained in said cathode and/or anode compartment to prevent or restrict the pH variation of said solution or solutions during the reduction of water.

17. An electrolysis device according to claim 16, **characterized in that** said additional weak acid has the same chemical structure as the weak acid initially contained in said cathode compartment.

18. An electrolysis device according to any one of the preceding claims, **characterized in that** said cathode compartment is sealed.

19. Use of a device as defined in any one of the claims 1 to 18 to produce hydrogen by the reduction of water.
